# EUROPEAN PATENT APPLICATION

(11) **EP 2 695 756 A1**
(43) Date of publication of application: **12.02.2014**
(21) Application number: 11862017.8
(22) Date of filing: 30.09.2011
(51) Int. Cl.: B60H 1/03, B60H 1/22

(54) **HEAT MEDIUM HEATING DEVICE AND VEHICLE AIR CONDITIONER PROVIDED WITH SAME**

(30) Priority: 25.03.2011 JP 2011068266; 12.09.2011 JP 2011198071
(71) Applicant: Mitsubishi Heavy Industries Automotive Thermal Systems Co., Ltd., Aichi 452-8561 (JP)
(72) Inventor: KOMINAMI, Satoshi, Tokyo 108-8215 (JP); SAITO, Katsuhiro, Tokyo 108-8215 (JP); AOKI, Yasutaka, Tokyo 108-8215 (JP); UEFUJI, Yoichi, Tokyo 108-8215 (JP); KUNIEDA, Naoto, Nagoya-shi Aichi 453-0862 (JP)
(74) Representative: Henkel, Breuer & Partner
(86) International application number: PCT/JP2011/072557
(87) International publication number: WO 2012/132068

(57) **Abstract**

An object of the present invention is to provide a small, lightweight, and inexpensive heat medium heating apparatus in which a flat tube heat exchanger and a PTC heater are laminated in a multi-layered manner to reduce a thermal contact resistance thereamong, heat transfer performance is improved, and also in which assembling of the flat tube heat exchanger and the PTC heater is made easier. The heat medium heating apparatus is provided with: a plurality of flat tube heat exchangers (17); PTC heaters (18) that are incorporated between flat tube sections of the plurality of flat tube heat exchangers (17); and a heat exchanger pressing member (16) that presses the laminated flat tube heat exchangers (17) and PTC heaters (18) from a one surface side of the flat tube heat exchangers (17) to bring them into close contact with each other, wherein each flat tube heat exchanger (17) is made as the tube in which an inlet header section (21) and an outlet header section (22) are located side by side at one end, a U-turn section is formed at the other end, and also in which the flat tube section forms a U-turn flow path leading from the inlet header section (21) to the outlet header section (22) through the U-turn section, and wherein the flat tube heat exchanger (17) and the PTC heater (18) are alternately laminatedly disposed in the multi-layered manner.

## Description

### {Technical Field}

The present invention relates to a heat medium heating apparatus that heats a heat medium using a PTC (Positive Temperature Coefficient) heater, and a vehicle air-conditioning apparatus provided with the heat medium heating apparatus.

### {Background Art}

In a vehicle air-conditioning apparatus applied to an electric vehicle, a hybrid vehicle, etc., as one of heat medium heating apparatuses that heat a heated medium serving as a heat source for heating, there has been known a heat medium heating apparatus using a PTC heater in which a positive temperature coefficient device (hereinafter referred to as a PTC device) is used as a heat generating element. The PTC heater has a positive temperature coefficient thermistor characteristic, in which a resistance value rises along with rise in temperature, thereby a consumption current is controlled and rise in temperature becomes moderate, subsequently, the consumption current and temperature of a heat generating section reach a saturation region to be stabilized, and thus a self-temperature control characteristic is provided.

With regard to the heat medium heating apparatus as described above, PTL 1 presents a heat medium heating apparatus in which a number of partition walls that divide an inside of a housing into a heat chamber and a circulation chamber for a heat medium are provided inside the housing provided with an inlet and an outlet for the heat medium, a PTC heating device is inserted and placed on a heat chamber side partitioned by the partition walls so as to be in contact with the partition walls, and in which the heat medium is heated that is flowed to a circulation chamber side through the partition walls.

PTL 2 presents a heat medium heating apparatus with a laminated structure in which an electrode plate, an insulation layer, and a heat transfer layer are provided on both sides of a PTC device while sandwiching it to thereby configure a tabular PTC heater, a pair of heat medium flow boxes that are provided with an inlet and an outlet for a heat medium and that are communicated with each other are laminated on both surfaces of the PTC heater, and in which a substrate housing box to house a control board and a cover are further provided on an outer surface side of the pair of heat medium flow boxes.

### {Citation List}

### {Patent Literature}

{PTL 1}
   Japanese Unexamined Patent Application, Publication No. 2008-7106
{PTL 2}
   Japanese Unexamined Patent Application, Publication No. 2008-56044

### {Summary of Invention}

### {Technical Problem}

However, the heat medium heating apparatus shown in the above-described PTL 1 is configured such that the PTC heating device is inserted and placed in the heat chamber formed with the partition walls. Therefore, there have been such problems that it is difficult to insert and place the PTC heating device between the partition walls serving as a heat transfer surface while keeping adhesion property to the partition walls, a thermal contact resistance between the partition wall and the PTC heating device becomes large, and that a heat transfer efficiency becomes low. Meanwhile, there have been such problems that when a space between the partition walls is narrowed to enhance the adhesion property, assembling workability is significantly deteriorated, the number of processes of the assembling is increased, etc.

Since the heat medium heating apparatus in PTL 2 is configured such that the pair of heat medium flow boxes having a radiation fin on both sides of the PTC heater is laminated, the substrate housing box to house the control board and the cover are laminated on the outer surface of the pair of heat medium flow boxes to be fastened by bolts, the PTC heater and the heat medium flow boxes are brought into close contact with each other, and a thermal contact resistance therebetween can be reduced. However, since it is difficult to arrange the PTC heater in a multi-layered manner, a flat surface area becomes large, and also a heat medium flow box and a dedicated substrate housing box are needed, and these are made by aluminum die casting in view of heat resistance property, heat transfer property, etc., so that there have been problems, such as a limit of reduction in size and weight, and high cost.

The present invention has been made in view of such circumstances, and an object of the present invention is to provide a small, lightweight, and inexpensive heat medium heating apparatus in which a plurality of flat tube heat exchangers and PTC heaters are laminated in a multi-layered manner to reduce a thermal contact resistance therebetween, heat transfer performance is improved, and also in which assembling of the flat tube heat exchangers and the PTC heaters is made easier, and a vehicle air-conditioning apparatus provided with the heat medium heating apparatus.

### {Solution to Problem}

In order to solve the above-described problems, the heat medium heating apparatus and the vehicle air-conditioning apparatus provided with the same of the present invention employ the following solutions.

Namely, a heat medium heating apparatus pertaining to one aspect of the present invention is provided with: a plurality of flat tube heat exchangers in each of which a heat medium flowed from an inlet header section flows through a flat tube section, and subsequently is flowed out of an outlet header section; a PTC heater that is incorporated between the flat tube sections of the plurality of mutually laminated flat tube heat exchangers; and a heat exchanger pressing member that presses the plurality of laminated flat tube heat exchangers and the PTC heater from a one surface side of the flat tube heat exchangers to bring them into close contact with each other, and the each flat tube heat exchanger is made as the tube in which the inlet header section and the outlet header section are located side by side at one end, a U-turn section for a heat medium flow is formed at the other end, and also in which the flat tube section forms a U-turn flow path leading from the inlet header section to the outlet header section through the U-turn section, and the flat tube heat exchanger and the PTC heater are alternately laminatedly disposed in a multi-layered manner.

According to the above-described aspect, upon incorporating the PTC heater between the flat tube sections of the flat tube heat exchangers in each of which the inlet header section and the outlet header section are located side by side at one end, the U-turn section for the heat medium flow is formed at the other end, and also in which the U-turn flow path is formed where the flat tube section leads from the inlet header section to the outlet header section through the U-turn section, the flat tube heat exchanger and the PTC heater are alternately laminatedly disposed in the multi-layered manner and pressed by the heat exchanger pressing member from the one surface side to be brought into close contact with each other, so that incorporation of the PTC heater between the flat tube sections can be made easier, and also adhesion property of the flat tube section and the PTC heater can be enhanced by pressure of the heat exchanger pressing member. Accordingly, the adhesion property between the flat tube heat exchanger and the PTC heater are enhanced, a thermal contact resistance therebetween is reduced, thereby a heat transfer efficiency is improved, and higher performance of the heat medium heating apparatus can be achieved. In addition, in the flat tube heat exchanger in which the inlet header section and the outlet header section are located side by side at the one end thereof, a heating capacity of the PTC heater on an outlet header section side where load is low can be effectively utilized on an inlet header section side, and thus a much higher efficiency can be realized. Furthermore, since the plurality of flat tube heat exchangers respectively have a one-end header structure in which the inlet header section and the outlet header section are located side by side at the one end, a size in a longitudinal direction of the flat tube heat exchanger can be more reduced compared with a flat tube heat exchanger with a both-ends header structure. In addition, the need for a large heat medium flow box etc. can be eliminated, so that reduction in size and weight and reduction in cost of the heat medium heating apparatus can be achieved.

In the above-described heat medium heating apparatus, a sealing material may be disposed in peripheries of communication holes provided in the inlet header section and the outlet header section of the flat tube heat exchanger.

In this way, since the sealing material is disposed in the peripheries of the communication holes provided in the inlet header section and the outlet header section of the flat tube heat exchanger, the inlet header sections and the outlet header sections of the plurality of mutually laminated flat tube heat exchangers are pressed by the heat exchanger pressing member, and thereby the sealing material disposed in the peripheries of the communication holes of the inlet and outlet header sections can be reliably made to adhere to seal the peripheries of the communication holes. Accordingly, leakage of the heat medium from the inlet and outlet header sections can be prevented, and sealing property thereof can be improved.

Furthermore, a heat medium heating apparatus pertaining to one embodiment of the present invention is provided with: a plurality of flat tube heat exchangers in each of which a heat medium flowed from an inlet header section flows through a flat tube section, and subsequently is flowed out of an outlet header section; a PTC heater that is incorporated between the flat tube sections of the plurality of mutually laminated flat tube heat exchangers; and a heat exchanger pressing member that presses the plurality of laminated flat tube heat exchangers and the PTC heater from a one surface side of the flat tube heat exchangers to bring them into close contact with each other, and the each flat tube heat exchanger is made as the tube in which the inlet header section and the outlet header section are located side by side at one end, a U-turn section for a heat medium flow is formed at the other end, and also in which the flat tube section forms a U-turn flow path leading from the inlet header section to the outlet header section through the U-turn section, and in which an end on a side of the U-turn section is unconstrained in a lamination direction.

According to the above-described aspect, the heat medium heating apparatus is configured such that each flat tube heat exchanger and PTC heater are pressed by the heat exchanger pressing member to be brought into close contact with each other in a state where the plurality of flat tube heat exchangers are laminated, and where the PTC heater is incorporated between the flat tube sections of the flat tube heat exchangers. Furthermore, each flat tube heat exchanger is made as the tube in which the inlet header section and the outlet header section are located side by side at one end, the U-turn section is formed at the other end, and also in which the flat tube section forms the U-turn flow path leading from the inlet header section to the outlet header section through the U-turn section, and in which the end on the U-turn section side is unconstrained in the lamination direction, so that in the PTC heater being incorporated to be laminated between the flat tube sections of the plurality of flat tube heat exchangers, the PTC heater is inserted from the end on the U-turn section side of the unconstrained flat tube heat exchanger, and thereby the PTC heater can be easily incorporated between the flat tube sections. Accordingly, incorporation work of the PTC heater between the flat tube sections can be made easier, and also inter-tube spaces in the inlet and outlet header sections are set to be corresponding to a thickness size of a PTC heater, whereby can be relieved stress concentration on tube bases due to tube curvature when the flat tube sections and the PTC heater are brought into close contact with each other. In addition, in order to improve adhesion property of the flat tube sections and the PTC heater, at least the flat tube sections of the flat tube heat exchangers may just be pressed by the heat exchanger pressing member, a strength need not be made high so that the inlet and outlet header sections are not crushed at the time of pressure. Accordingly, structures of the inlet and outlet header sections can be simplified, and also the adhesion property between the flat tube heat exchangers and the PTC heater is enhanced, the heat transfer efficiency is improved by reducing the thermal contact resistance therebetween, and higher performance of the heat medium heating apparatus can be achieved. In particular, the heating capacity of the PTC heater on the outlet header section side where load is low can be effectively utilized on the inlet header section side, and thus a much higher efficiency can be realized. Furthermore, since the plurality of flat tube heat exchangers respectively have the one-end header structure in which the inlet header section and the outlet header section are located side by side at the one end, the size in the longitudinal direction of the tube can be more reduced compared with the flat tube heat exchanger with the both-ends header structure. In addition, the need for the large heat medium flow box etc. can be eliminated, so that reduction in size and weight and reduction in cost of the heat medium heating apparatus can be achieved.

In the above-described heat medium heating apparatus, the each flat tube heat exchanger may be made as the flat tube in which a pair of molded plate members where the inlet header section and the outlet header section and the flat tube section have been integrally molded is overlapped and brazed.

In this way, since the each flat tube heat exchanger is made as the flat tube in which the pair of plate members where the inlet header section and the outlet header section and the flat tube section have been integrally molded is overlapped and brazed, the flat tube heat exchanger is made as the thin flat tube in which the pair of molded plate members has been laminated, the PTC heater is laminatedly disposed between the thin flat tubes in the multi-layered manner, and thereby a heat exchange module having a thin structure with a small flat surface area can be configured. Accordingly, by incorporation of the heat exchange module, reduction in size and weight and reduction in cost of the heat medium heating apparatus can be achieved, and also incorporation of the PTC heater can be made easier.

Furthermore, in any of the above-mentioned heat medium heating apparatuses, in the each flat tube heat exchanger, a heat blocking section may be provided between two flow paths that form the U-turn flow path.

In this way, since the heat blocking section is provided between the two flow paths that form the U-turn flow path of each flat tube heat exchanger, inter-heat medium heat transfer between a heat medium with a low temperature near the inlet header section, the heat medium flowing through the two flow paths that form the U-turn flow path, and a heat medium on the outlet header section side whose temperature has become higher by being heated by the PTC heater can be blocked through the heat blocking section constituted by, for example, a slit etc. Accordingly, heat loss due to inter-heat medium heat transfer can be reduced, and much higher performance of the heat medium heating apparatus can be realized.

Furthermore, a heat medium heating apparatus pertaining to one aspect of the present invention is provided with: a plurality of flat tube heat exchangers in each of which a heat medium flowed from an inlet header section flows through a flat tube section, and subsequently is flowed out of an outlet header section; a PTC heater that is incorporated between the flat tube sections of the plurality of mutually laminated flat tube heat exchangers; and a heat exchanger pressing member that presses the plurality of laminated flat tube heat exchangers and the PTC heater from a one surface side of the flat tube heat exchangers to bring them into close contact with each other, and the each flat tube heat exchanger is made as the tube in which the inlet header section is provided at one end, the outlet header section is provided at the other end, a portion therebetween is made as the flat tube section, and also in which an inter-tube space at least on a one side in the tube longitudinal direction of the flat tube section is gradually enlarged outwardly in an unassembled state.

According to the above-described aspect, the heat medium heating apparatus is configured such that each flat tube heat exchanger and PTC heater are pressed by the heat exchanger pressing member to be brought into close contact with each other in a state where the plurality of flat tube heat exchangers are laminated, and where the PTC heater is incorporated between the flat tube sections of the flat tube heat exchangers. Furthermore, each flat tube heat exchanger is made as the tube in which the inlet header section is provided at one end, the outlet header section is provided at the other end, the portion therebetween is made as the flat tube section, and also in which the inter-tube space at least on the one side in the tube longitudinal direction of the flat tube section is gradually enlarged outwardly in the unassembled state, so that in the PTC heater being incorporated to be laminated between the flat tube sections of the plurality of flat tube heat exchangers, the PTC heater is inserted from the one side in the tube longitudinal direction in which the inter-tube space is gradually enlarged outwardly in the unassembled state, and thereby the PTC heater can be easily incorporated between the flat tube sections. Accordingly, incorporation work of the PTC heater between the flat tube sections can be made easier, and also the inter-tube spaces in the inlet and outlet header sections are set to be corresponding to the thickness size of the PTC heater, whereby can be relieved stress concentration on the tube bases due to tube curvature when the flat tube sections and the PTC heater are brought into close contact with each other. In addition, in order to improve adhesion property of the flat tube sections and the PTC heater, at least the flat tube sections of the flat tube heat exchangers may just be pressed by the heat exchanger pressing member, the strength need not be made high so that the inlet and outlet header sections are not crushed at the time of pressure. Accordingly, the structures of the inlet and outlet header sections can be simplified, and also the adhesion property between the flat tube heat exchangers and the PTC heater is enhanced, the heat transfer efficiency is improved by reducing the thermal contact resistance therebetween, and thereby higher performance of the heat medium heating apparatus can be achieved. Furthermore, the flat surface area can be made small by laminatedly disposing the plurality of flat tube heat exchangers and the PTC heater in the multi-layered manner. In addition, the need for the large heat medium flow box etc. can be eliminated, so that reduction in size and weight and reduction in cost of the heat medium heating apparatus can be achieved.

Furthermore, the above-described heat medium heating apparatus may be configured such that the inlet header section and the outlet header section are deviated to be disposed on the one side in the tube longitudinal direction, and such that the inter-tube space of the flat tube sections is gradually enlarged from the one side to the other side.

In this way, since the heat medium heating apparatus is configured such that the inlet header section and the outlet header section are deviated to be disposed on the one side in the tube longitudinal direction, and such that the inter-tube space of the flat tube section is gradually enlarged from the one side to the other side, the inter-tube space of the flat tube sections in which the PTC heater is incorporated can be gradually enlarged over a whole tube width direction from the one side to the other side in the tube longitudinal direction. Accordingly, the PTC heater is made easier to insert between the flat tube sections of the plurality of flat tube heat exchangers, and incorporation work of the PTC heater can be made much easier.

Furthermore, a vehicle air-conditioning apparatus pertaining to one aspect of the present invention is the vehicle air-conditioning apparatus configured such that a heat medium heated by a heat medium heating apparatus can be circulated in a radiator disposed in an air flow path, wherein the heat medium heating apparatus is made as any of the above-mentioned heat medium heating apparatuses.

According to the above-described aspect, since the vehicle air-conditioning apparatus is configured such that the heat medium heated by any of the above-mentioned heat medium heating apparatuses can be circulated in the radiator disposed in the air flow path, the heat medium supplied to the radiator disposed in the air flow path can be heated to be supplied by the above-mentioned heat medium heating apparatus that is small, lightweight, and has higher performance. Accordingly, improvement in air-conditioning performance, particularly heating performance in the vehicle air-conditioning apparatus can be achieved, and also mounting property of an air-conditioning apparatus to a vehicle can be improved.

### {Advantageous Effects of Invention}

According to the heat medium heating apparatus of the present invention, the flat tube heat exchanger and the PTC heater may just be alternately laminatedly incorporated in the multi-layered manner, incorporation of the PTC heater between the flat tube sections can be made easier, and also adhesion property of the flat tube sections and the PTC heater can be enhanced by pressure of the heat exchanger pressing member, so that the adhesion property between the flat tube heat exchanger and the PTC heater are enhanced, a thermal contact resistance therebetween is reduced, thereby a heat transfer efficiency is improved, and higher performance of the heat medium heating apparatus can be achieved. In addition, in the flat tube heat exchanger in which the inlet header section and the outlet header section are located side by side at the one end, a heating capacity of the PTC heater on an outlet header section side where load is low can be effectively utilized on an inlet header section side, and thus a much higher efficiency can be realized. Furthermore, since the plurality of flat tube heat exchangers respectively have the one-end header structure in which the inlet header section and the outlet header section are located side by side on the one end, a size in a longitudinal direction of the flat tube heat exchanger can be more reduced compared with a flat tube heat exchanger with the both-ends header structure. In addition, the need for a large heat medium flow box etc. can be eliminated, so that reduction in size and weight and reduction in cost of the heat medium heating apparatus can be achieved.

According to the heat medium heating apparatus of the present invention, in the PTC heater being incorporated to be laminated between the flat tube sections of the plurality of flat tube heat exchangers, the PTC heater is inserted from the end on the U-turn section side of the unconstrained flat tube heat exchanger, and thereby the PTC heater can be easily incorporated between the flat tube sections, so that incorporation work of the PTC heater between the flat tube sections can be made easier, and also the inter-tube spaces in the inlet and outlet header sections are set to be corresponding to the thickness size of the PTC heater, whereby can be relieved stress concentration on the tube bases due to tube curvature when the flat tube sections and the PTC heater are brought into close contact with each other. In addition, in order to improve adhesion property of the flat tube sections and the PTC heater, at least the flat tube sections of the flat tube heat exchangers may just be pressed by the heat exchanger pressing member, the strength need not be made high so that the inlet and outlet header sections are not crushed at the time of pressure. Accordingly, the structures of the inlet and outlet header sections can be simplified, and also the adhesion property between the flat tube heat exchangers and the PTC heater is enhanced, the heat transfer efficiency is improved by reducing the thermal contact resistance therebetween, and thereby higher performance of the heat medium heating apparatus can be achieved. In particular, the heating capacity of the PTC heater on the outlet header section side where load is low can be effectively utilized on the inlet header section side, and thus a much higher efficiency can be realized. Furthermore, since the plurality of flat tube heat exchangers respectively have the one-end header structure in which the inlet header section and the outlet header section are located side by side at the one end, the size in the longitudinal direction of the tube can be more reduced compared with the flat tube heat exchanger with the both-ends header structure. In addition, the need for the large heat medium flow box etc. can be eliminated, so that reduction in size and weight and reduction in cost of the heat medium heating apparatus can be achieved.

According to the heat medium heating apparatus of the present invention, in the PTC heater being incorporated to be laminated between the flat tube sections of the plurality of flat tube heat exchangers, the PTC heater is inserted from the one side in the tube longitudinal direction in which the inter-tube space is gradually enlarged outwardly in the unassembled state, and thereby the PTC heater can be easily incorporated between the flat tube sections, so that incorporation work of the PTC heater between the flat tube sections can be made easier, and also the inter-tube spaces in the inlet and outlet header sections are set to be corresponding to the thickness size of the PTC heater, whereby can be relieved stress concentration on the tube bases due to tube curvature when the flat tube sections and the PTC heater are brought into close contact with each other. In addition, in order to improve adhesion property of the flat tube sections and the PTC heater, at least the flat tube sections of the flat tube heat exchangers may just be pressed by the heat exchanger pressing member, the strength need not be made high so that the inlet and outlet header sections are not crushed at the time of pressure. Accordingly, the structures of the inlet and outlet header sections can be simplified, and also the adhesion property between the flat tube heat exchangers and the PTC heater is enhanced, the heat transfer efficiency is improved by reducing the thermal contact resistance therebetween, and thereby higher performance of the heat medium heating apparatus can be achieved. Furthermore, the flat surface area can be made small by laminatedly disposing the plurality of flat tube heat exchangers and the PTC heater in the multi-layered manner. In addition, the need for the large heat medium flow box etc. can be eliminated, so that reduction in size and weight and reduction in cost of the heat medium heating apparatus can be achieved.

According to the vehicle air-conditioning apparatus of the present invention, since the heat medium supplied to the radiator disposed in the air flow path can be heated to be supplied by the above-mentioned heat medium heating apparatus in which reduction in size and weight, and higher performance have been achieved, improvement in air-conditioning performance, particularly heating performance in the vehicle air-conditioning apparatus can be achieved, and also mounting property of the air-conditioning apparatus to a vehicle can be improved.

### {Brief Description of Drawings}

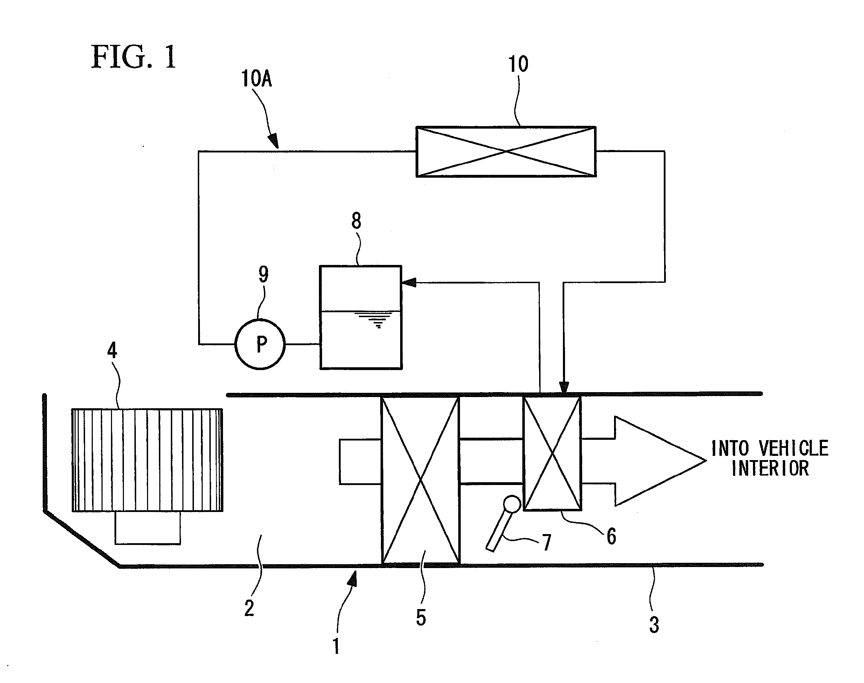

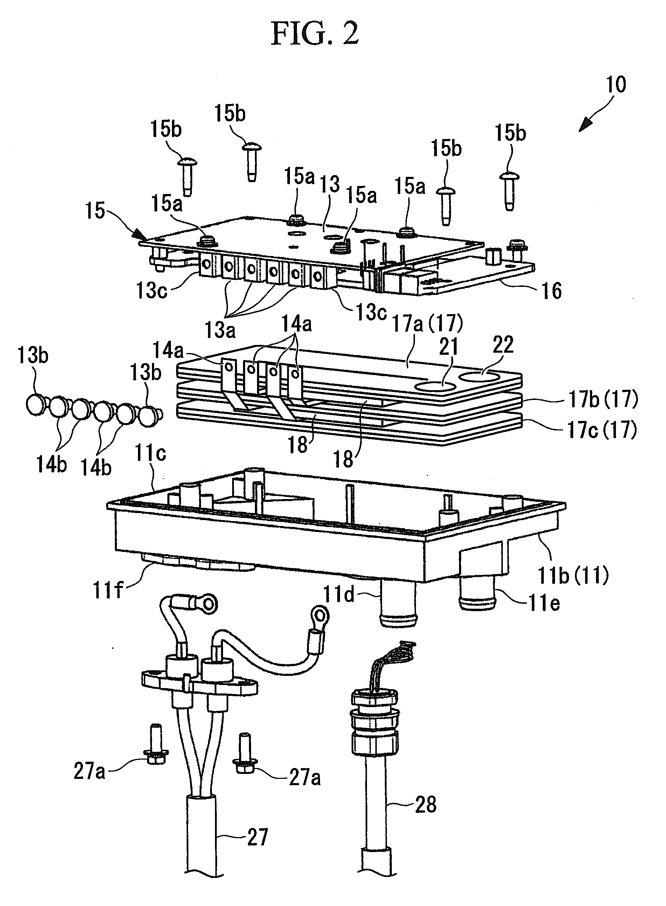

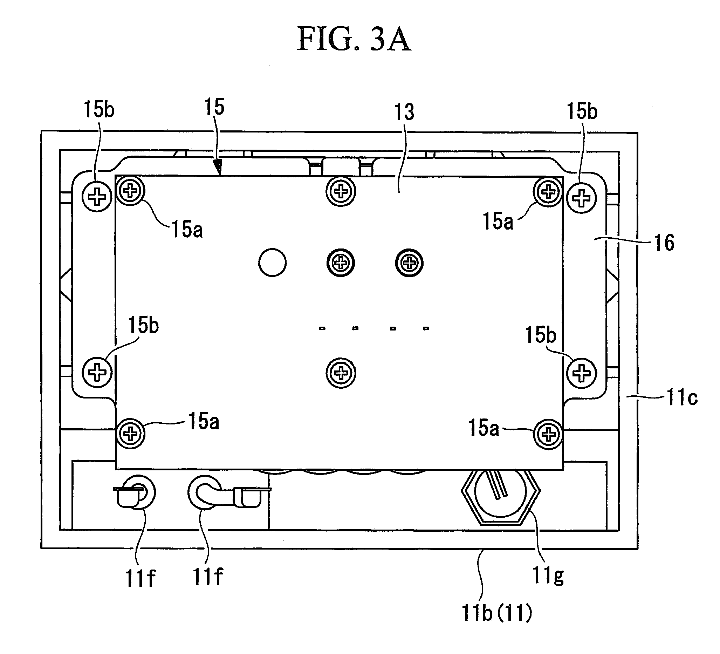

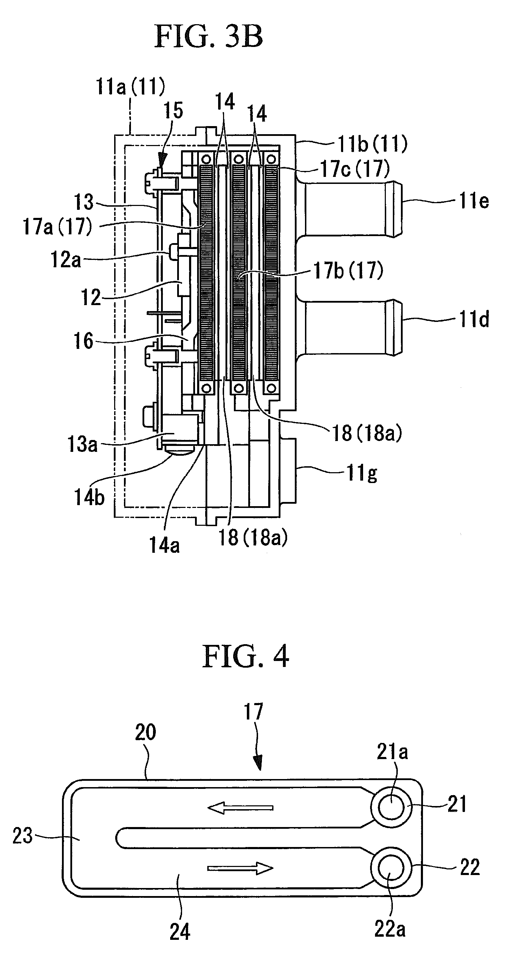

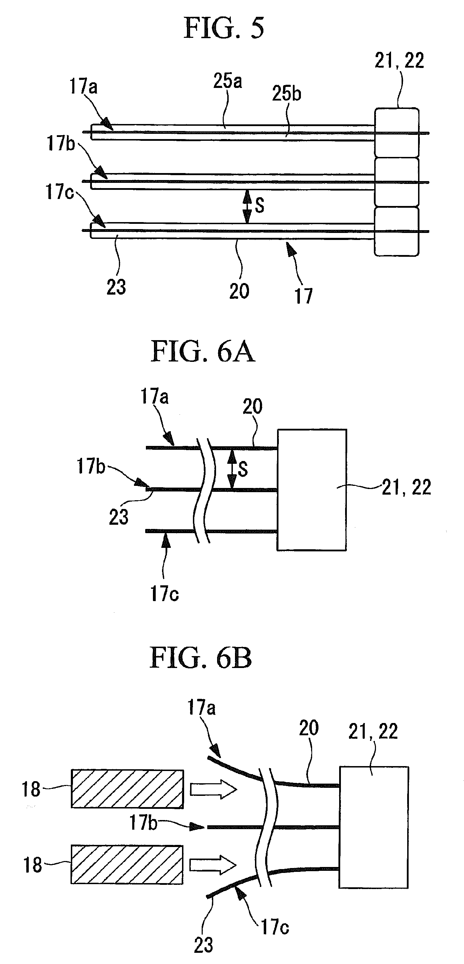

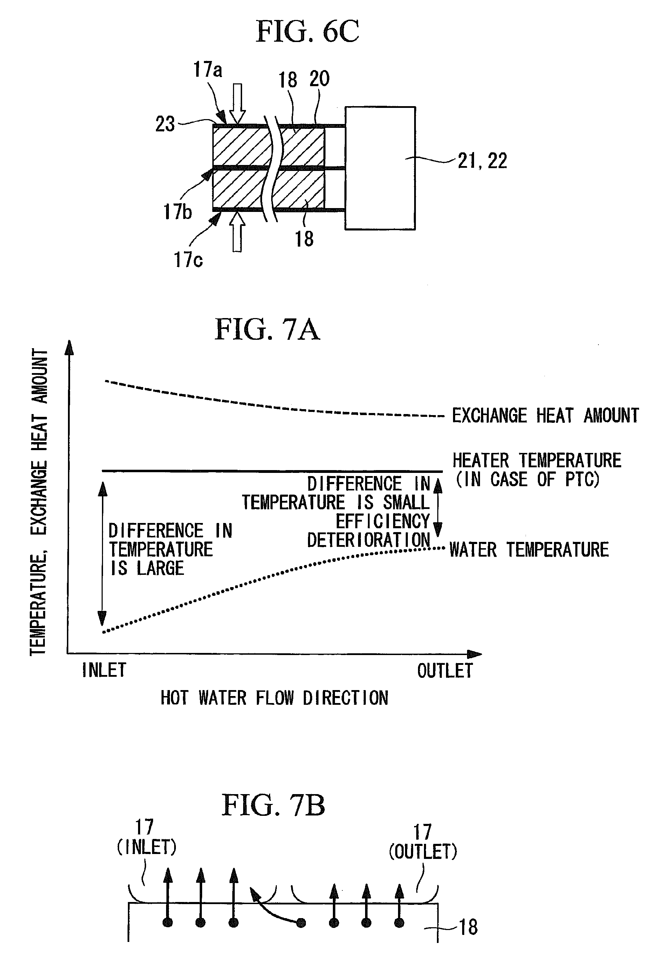

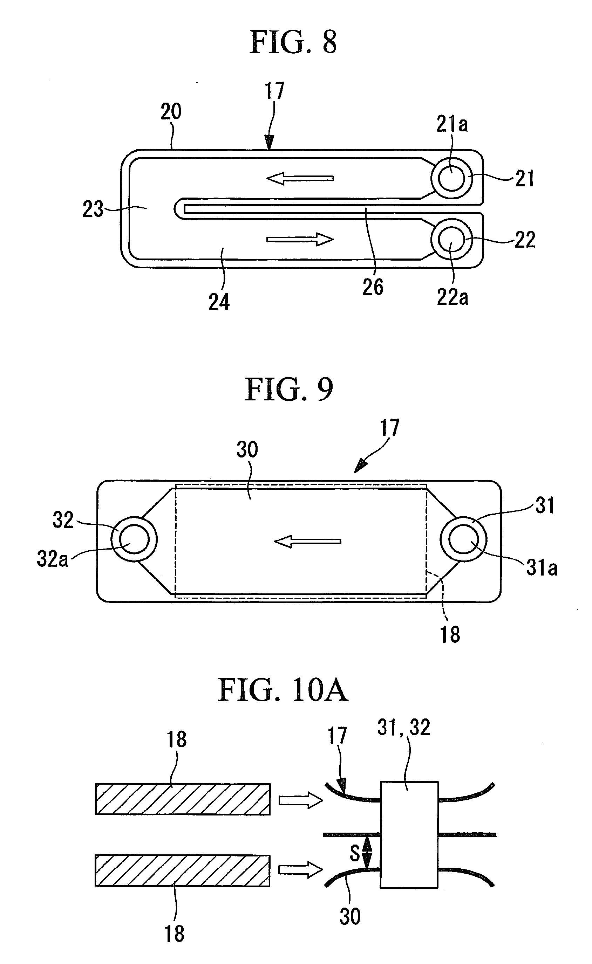

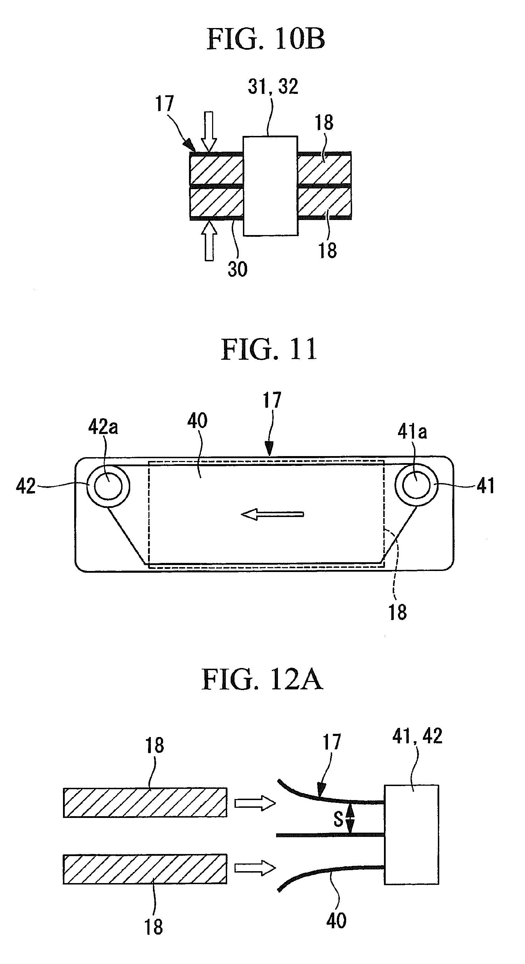

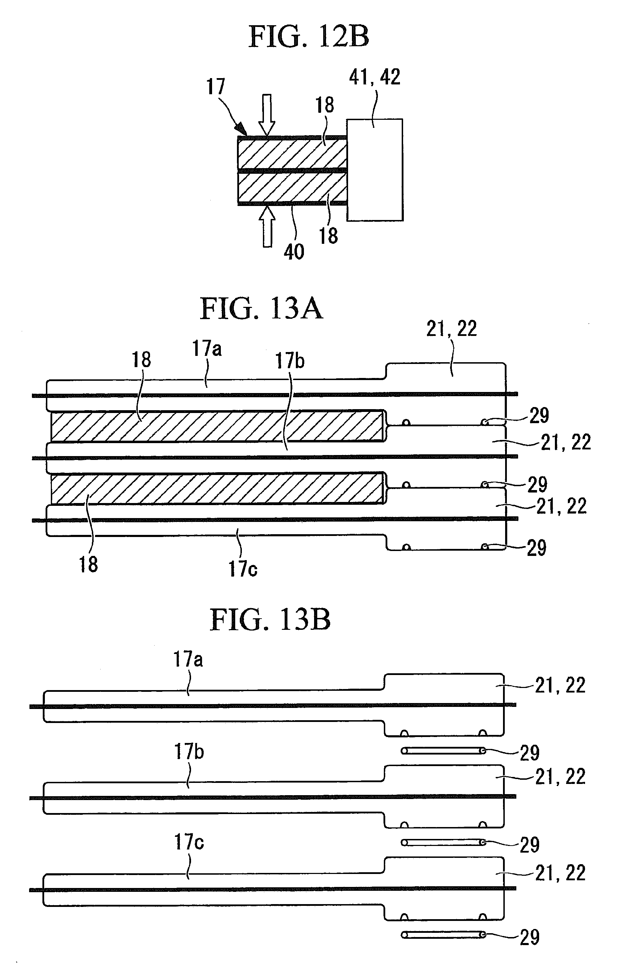

{Fig. 1} Fig. 1 is a schematic configuration diagram of a vehicle air-conditioning apparatus provided with a heat medium heating apparatus pertaining to a first embodiment of the present invention.
{Fig. 2} Fig. 2 is an exploded perspective view for explaining an assembling procedure of the heat medium heating apparatus shown in Fig. 1.
{Fig. 3A} Fig. 3A is a plan view of the heat medium heating apparatus shown in Fig. 2.
{Fig. 3B} Fig. 3B is a side view of the heat medium heating apparatus shown in Fig. 2.
{Fig. 4} Fig. 4 is a plan view of a flat tube heat exchanger applied to the heat medium heating apparatus shown in Fig. 2.
{Fig. 5} Fig. 5 is a side view of the flat tube heat exchanger shown in Fig. 4.
{Fig. 6A} Fig. 6A is an image diagram of an assembling procedure of the flat tube heat exchanger shown in Figs. 4 and 5 and a PTC heater.
{Fig. 6B} Fig. 6B is an image diagram of the assembling procedure of the flat tube heat exchanger shown in Figs. 4 and 5 and the PTC heater.
{Fig. 6C} Fig. 6C is an image diagram of the assembling procedure of the flat tube heat exchanger shown in Figs. 4 and 5 and the PTC heater.
{Fig. 7A} Fig. 7A is an explanatory graph of a heat exchange state of a flat tube heat exchanger and a PTC heater of the heat medium heating apparatus shown in Fig. 2.
{Fig. 7B} Fig. 7B is an explanatory diagram of the heat exchange state of the flat tube heat exchanger and the PTC heater of the heat medium heating apparatus shown in Fig. 2.
{Fig. 8} Fig. 8 is a plan view of a flat tube heat exchanger applied to a heat medium heating apparatus pertaining to a second embodiment of the present invention.
{Fig. 9} Fig. 9 is a plan view of a flat tube heat exchanger applied to a heat medium heating apparatus pertaining to a third embodiment of the present invention.
{Fig. 10A} Fig. 10A is an image diagram of an assembling procedure of the flat tube heat exchanger and a PTC heater shown in Fig. 9.
{Fig. 10B} Fig. 10B is an image diagram of an assembling procedure of the flat tube heat exchanger and the PTC heater shown in Fig. 9.
{Fig. 11} Fig. 11 is a plan view of a flat tube heat exchanger applied to a heat medium heating apparatus pertaining to a fourth embodiment of the present invention.
{Fig. 12A} Fig. 12A is an image diagram of an assembling procedure of the flat tube heat exchanger and a PTC heater shown in Fig. 11. {Fig. 12B} Fig. 12B is an image diagram of the assembling procedure of the flat tube heat exchanger and the PTC heater shown in Fig. 11.
{Fig. 13A} Fig. 13A is a side view of a lamination state of flat tube heat exchangers and PTC heaters of a heat medium heating apparatus pertaining to a fifth embodiment of the present invention.
{Fig. 13B} Fig. 13B is an exploded view of the heat medium heating apparatus pertaining to the fifth embodiment of the present invention before the flat tube heat exchangers and the PTC heaters are laminated.

### {Description of Embodiments}

Hereinafter, embodiments pertaining to the present invention will be described with reference to drawings.

### [First embodiment]

Hereinafter, a first embodiment of the present invention will be described using Figs. 1 to 7B.

Fig. 1 shows a schematic configuration diagram of a vehicle air-conditioning apparatus provided with a heat medium heating apparatus pertaining to the first embodiment of the present invention.

A vehicle air-conditioning apparatus 1 is provided with a casing 3 that forms an air flow path 2 for directing a temperature-adjusted air into a vehicle interior, after taking in an outside air or an air in the vehicle interior and adjusting temperature thereof.

Inside the casing 3, a blower 4 that suctions the outside air or the air in the vehicle interior to perform pressure raising sequentially from an upstream side to a downstream side of the air flow path 2, and pressure-feeds the pressure-raised air to the downstream side; a cooler 5 that cools the air pressure-fed by the blower 4; a radiator 6 that heats the air having passed through the cooler 5 to thereby be cooled; and an air mix damper 7 that adjusts a flow ratio of an amount of air passing through the radiator 6 and an amount of air bypassing the radiator 6, air-mixes the airs on the downstream side thereof, and thereby adjusts temperature of an air to be temperature-adjusted are contained.

A downstream side of the casing 3 is connected to a plurality of blow-off openings through which a temperature-adjusted air is blown off into the vehicle interior through a blow-off mode switching damper and a duct that are not shown.

The cooler 5 constitutes a refrigerant circuit together with a compressor, a condenser, an expansion valve, etc. that are not shown, and cools an air that passes through the refrigerant circuit by evaporating an adiabatically-expanded refrigerant by the expansion valve. The radiator 6 constitutes a heat medium circulation circuit 10A together with a tank 8, a pump 9, and a heat medium heating apparatus 10, and warms an air that passes through the heat medium circulation circuit 10A by a heat medium (for example, an antifreeze solution, hot water, etc.) heated to a high temperature by the heat medium heating apparatus 10 being circulated through the pump 9.

Fig. 2 shows an exploded perspective view for explaining an assembling procedure of the heat medium heating apparatus 10 shown in Fig. 1, and Figs. 3A and 3B show a plan view (Fig. 3A) and a side view (Fig. 3B) of the heat medium heating apparatus 10. The heat medium heating apparatus 10 is, as shown in Fig. 2, provided with: a control board 13; a plurality of electrode plates 14 (refer to Fig. 3B); a plurality of semiconductor switching devices 12 (refer to Fig. 3B) constituted by an IGBT etc.; a heat exchanger pressing member 16; a plurality of (for example, three) flat tube heat exchangers 17; a plurality sets of PTC (Positive Temperature Coefficient) devices 18a (refer to Fig. 3B); and a casing 11 for housing these control board 13, electrode plates 14, semiconductor switching devices 12, the plurality of flat tube heat exchangers 17, the heat exchanger pressing member 16, the plurality sets of PTC devices 18a, etc. A PTC heater 18 is constituted by the electrode plate 14, the PTC device 18a, an insulating member (not shown) that will be mentioned later, etc.

The casing 11 has a configuration divided into two of an upper half portion and a lower half portion, and is provided with an upper case 11a (refer to Fig. 3B) located at the upper half portion and a lower case 11b located at the lower half portion. In addition, insides of the upper case 11a and the lower case 11b, a space is formed to house the above-described control board 13, semiconductor switching device 12, electrode plate 14, heat exchanger pressing member 16, the plurality of laminated flat tube heat exchangers 17, the plurality sets of PTC heaters 18, etc. by placing the upper case 11a from an upper side of the lower case 11b to an opening 11c of the lower case 11b.

On a bottom surface of the lower case 11b, integrally formed are a heat medium inlet path 11d for directing a heat medium that is introduced into the laminated three flat tube heat exchangers 17, and a heat medium outlet path 11e for introducing out the heat medium having flowed through the flat tube heat exchangers 17. The lower case 11b is molded with a resin material (for example, PPS) close to an aluminum alloy material in linear expansion, the aluminum alloy material forming the flat tube heat exchanger 17 housed in an internal space of the lower case 11b. It is to be noted that the upper case 11a is desirably molded with a similar resin material to the lower case 11b. As described above, the casing 11 is constituted by the resin material, and thereby reduction in weight can be achieved.

On the bottom surface of the lower case 11b, opened are a power harness hole 11f and an LV harness hole 11g (refer to Fig. 3A) for penetrating tips of a power harness 27 and an LV harness 28. The power harness 27 supplies electric power to the PTC heater 18 through the control board 13 and the semiconductor switching device 12, the tip of the power harness 27 branches into two-pronged shape, and the power harness 27 can be screwed through an electrode harness connecting screw 13b to two power harness terminal blocks 13c provided on the control board 13. In addition, the LV harness 28 transmits a signal for control to the control board 13, and it is possible to perform connector connection of the tip of the LV harness 28 to the control board 13.

The semiconductor switching device 12 and the control board 13 constitute a control system that performs energization control to the plurality sets of PTC heaters 18 based on a command from a higher-level control unit (ECU), and the control system is configured such that an energized state to the plurality sets of PTC heaters 18 can be switched through the plurality of semiconductor switching devices 12, such as the IGBT. The plurality of flat tube heat exchangers 17 are then laminated so as to sandwich the plurality sets of PTC heaters 18 from both surface sides thereof.

The flat tube heat exchanger 17 is the tube made of an aluminum alloy material, and as shown in Figs. 2 and 3B, a lower tier, a middle tier, and an upper tier of flat tube heat exchangers 17c, 17b, and 17a are sequentially laminated in that order so that the three flat tube heat exchangers 17 are arranged in parallel with one another. These flat tube heat exchangers 17 are, as shown in Figs. 4 and 5, configured such that an inlet header section 21 and an outlet header section 22 are located side by side at one end of a flat tube section 20, a U-turn section 23 for making a heat medium flow U-turn is formed at the other end, and also a U-turn flow path 24 leading from the inlet header section 21 to the outlet header section 22 through the U-turn section 23 is formed at the flat tube section 20.

Each flat tube heat exchanger 17 is the tube in which a pair of thin molded plate members 25a and 25b made of an aluminum alloy material where the flat tube section 20, the inlet header section 21, and the outlet header section 22 have been integrally molded are overlapped and brazed. In addition, in the each flat tube heat exchanger 17, sizes in a thickness direction of the inlet header section 21 and the outlet header section 22 are made thicker than a size in a thickness direction of the flat tube section 20 that forms the U-turn flow path 24, and when the flat tube heat exchangers 17c, 17b, and 17a are laminated in that order, as shown in Fig. 5, an inter-tube space S with a predetermined size is formed among the flat tube sections 20. The size of the inter-tube space S is set to be a size large enough to be able to insert the PTC heater 18 whose both upper and lower surfaces have been sandwiched by the electrode plate 14, an insulator that is not shown, etc.

When each flat tube heat exchanger 17 is sequentially laminated, the inlet header section 21 and the outlet header section 22 are brought into close contact with each other as shown in Fig. 5, and communication holes 21a and 22a that are provided in the inlet header section 21 and the outlet header section 22 are communicated with each other. Meanwhile, the other end of the each tube made as the U-turn section 23 is made to be in a unconstrained state in the lamination direction. Furthermore, each flat tube heat exchanger 17 is made as a flat rectangular shape having longer sides in a horizontal direction (hereinafter referred to as an axial direction) of Fig. 4 when viewed from a plane, the flat tube heat exchangers 17c, 17b, and 17a are laminated in that order, and they are pressed in an inner bottom surface direction of the lower case 11b through a substrate sub-assembly 15 as will be mentioned later.

Among the flat tube sections 20 of the above-described three flat tube heat exchangers 17, the plurality sets of PTC heaters 18 are incorporated in the inter-tube spaces S through the electrode plate 14, an insulation sheet that is not shown, etc. as will be described below.

The electrode plate 14 is, as shown in Fig. 3B, the plate for supplying electric power to the PTC device 18a, and is made as a plate member made of aluminum alloy that presents a rectangular shape in a planar view. The electrode plate 14 is laminated on both surfaces of the PTC device 18a sandwiching the PTC device 18a so that one is in contact with a top surface of the PTC device 18a, and so that the other one is in contact with a bottom surface of the PTC device 18a. The top surface of the PTC device 18a and the bottom surface thereof are sandwiched by these two electrode plates 14 from upper and lower sides.

The electrode plate 14 arranged on a top surface side of the PTC device 18a is arranged so that a top surface of the electrode plate 14 is contact with a bottom surface of the flat tube heat exchanger 17 through the insulating member, and the electrode plate 14 arranged on a bottom surface side of the PTC device 18a is arranged so that a bottom surface of the electrode plate 14 is contact with a top surface of the flat tube heat exchanger 17 through the insulating member. In the embodiment, two electrode plates 14 are arranged between the lower tier of flat tube heat exchanger 17c and the middle tier of flat tube heat exchanger 17b, and between the middle tier of flat tube heat exchanger 17b and the upper tier of flat tube heat exchanger 17a, respectively, i.e., a total of four electrode plates 14 are arranged. The PTC heater 18 is laminatedly disposed in a multi-layered manner among the flat tube sections 20 of the three flat tube heat exchangers 17 respectively in a state of being sandwiched by the electrode plates 14.

Each of the four electrode plates 14 is made to have substantially a same shape as the flat tube section 20 of each flat tube heat exchanger 17. At each electrode plate 14, one terminal 14a is provided on a long side thereof. The terminal 14a provided at the electrode plate 14 is arranged along a long side direction of the electrode plate 14 so as not to be overlapped with one another when each electrode plate 14 is laminated. Namely, the terminal 14a provided at each electrode plate 14 is provided in a state where a position thereof is displaced little by little in the long side direction, and it is provided so as to be aligned in series when each electrode plate 14 is laminated. Each terminal 14a is provided projecting upwardly, and is connected to the terminal block 13a provided on the control board 13 through a terminal connecting screw 14b.

The substrate sub-assembly 15 is the sub-assembly in which the control board 13 and the heat exchanger pressing member 16 are disposed in parallel, and in which the plurality of semiconductor switching devices 12, such as the IGBT, disposed on a top surface of the heat exchanger pressing member 16 are sandwiched between the control board 13 and the heat exchanger pressing member 16. The control board 13 and the heat exchanger pressing member 16 are fixed by, for example, four substrate sub-assembly connecting screws 15a, and thereby the substrate sub-assembly 15 is integrated.

On the control board 13 constituting the substrate sub-assembly 15, four terminal blocks 13a are aligned in series on a bottom surface of one side of the control board 13 corresponding to the four terminals 14a aligned in series on each electrode plate 14. Two power harness terminal blocks 13c that are connected to the tips branched into two of the power harness 27 are provided so as to line on both end sides in series with the four terminal blocks 13a. These terminal blocks 13a and power harness terminal blocks 13c are provided projecting downwardly from a bottom surface of the control board 13. Each terminal block 13a and power harness terminal block 13c are provided so as to be in series along the long sides of the laminated flat tube heat exchangers 17a, 17b, and 17c.

Each terminal block 13a and power harness terminal block 13c that have been provided on the control board 13 are provided so as to be located a little more upwardly than the opening 11c of the lower case 11b. As a result, the embodiment is configured to easily fix the terminal 14a of the electrode plate 14 and the tips of the power harness 27 that are connected to each terminal block 13a and power harness terminal block 13c.

The heat exchanger pressing member 16 constituting the substrate sub-assembly 15 is made as a flat plate member made of aluminum alloy in a planar view. The semiconductor switching devices 12 constituted by the IGBT etc. is, as shown in Fig. 3B, disposed on the top surface of the heat exchanger pressing member 16. The semiconductor switching devices 12 is a transistor resin-molded in a substantially rectangular shape, and is constituted by a device that generates heat by actuation, so that on the top surface of the heat exchanger pressing member 16, the semiconductor switching devices 12 is screwed through a connecting screw 12a near the inlet header section 21 of the upper tier of flat tube heat exchanger 17a, and can be cooled with the heat exchanger pressing member 16 being as a heat sink.

The above-described heat exchanger pressing member 16 is made larger than the control board 13 in an axial direction (a horizontal direction of Fig. 3A), and a size of the heat exchanger pressing member 16 is large enough to cover top surfaces of the flat tube section 20 of each of the flat tube heat exchangers 17a, 17b, and 17c, and of the inlet and outlet header sections 21 and 22. In a portion made larger in the axial direction, a through hole (not shown) is provided at four corner sections through which a substrate sub-assembly fixing screw 15b (refer to Fig. 3A) for fixing the heat exchanger pressing member 16 to a boss section of the lower case 11b is passed.

The substrate sub-assembly 15 is placed on the top surface of the laminated upper tier of flat tube heat exchanger 17a, and is disposed such that a bottom surface of the heat exchanger pressing member 16 is in contact with the top surfaces of the flat tube section 20 of the upper tier of flat tube heat exchanger 17a, and of the inlet and outlet header sections 21 and 22. In the substrate sub-assembly 15, the heat exchanger pressing member 16 is screwed and fixed on a lower case 11b side through the four fixing screws 15b, whereby between the bottom surface of the heat exchanger pressing member 16 and the inner bottom surface of the lower case 11b, the flat tube sections 20 of the laminated three flat tube heat exchangers 17a, 17b, and 17c, and the two PTC heaters 18 sandwiched thereamong are pressed to be brought into close contact with each other, and can be tighten and fixed.

As a result, the heat medium heating apparatus 10 is configured such that the heat medium flowed from the heat medium inlet path 11d is introduced into the flat tube section 20 from the inlet header section 21 of each flat tube heat exchanger 17, heated and temperature-raised by the PTC heater 18 to be led to the outlet header section 22, while flowing through the U-turn flow path 24 of the flat tube section 20, and flowed outside from the outlet header section 22 through the heat medium outlet path 11e. The heat medium flowed out of the heat medium heating apparatus 10 is supplied to the radiator 6 through the heat medium circulation circuit 10A (refer to Fig. 1).

The heat exchanger pressing member 16 constituting the substrate sub-assembly 15 is made of an aluminum alloy material with excellent thermal conductivity, and is configured such that the bottom surface thereof is in contact with the top surface of the flat tube heat exchanger 17. Therefore, the heat exchanger pressing member 16, as described above, functions also as the heat sink that uses the heat medium flowing in the flat tube heat exchanger 17 as a cold source, and that cools the semiconductor switching device 12, such as the IGBT, disposed on the heat exchanger pressing member 16.

In the heat medium heating apparatus 10 configured as described above, the three flat tube heat exchangers 17a, 17b, and 17c are first laminated so as to be in parallel with one another as shown in Fig. 5, and are integrally joined by brazing etc. so that the inlet and outlet header sections 21 and 22 of each of the flat tube heat exchangers 17a, 17b, and 17c are communicated with each other through the communication holes 21a and 22a. Since the inter-tube space S is set among the flat tube sections 20 of the laminated three flat tube heat exchangers 17a, 17b, and 17c as shown in Fig. 5, the PTC heater 18 is, as shown in Fig. 6B, inserted in the inter-tube space S from an end on a U-turn section 23 side in a state where the PTC heater 18 is sandwiched by the insulating member on both sides thereof, and thereby as shown in Fig. 6C, the PTC heater 18 can be laminatedly disposed in the multi-layered manner among the flat tube sections 20 of the respective flat tube heat exchangers 17, respectively.

After sub-assembled three flat tube heat exchangers 17 and two sets of PTC heaters 18 are incorporated in a predetermined inner bottom surface position of the lower case 11b as described above, the substrate sub-assembly 15 is placed on the top surface of the uppermost tier of flat tube heat exchanger 17a, the heat exchanger pressing member 16 of the substrate sub-assembly 15 is screwed and fixed on the lower case 11b side through the four fixing screws 15b, and thereby the flat tube sections 20 of the three flat tube heat exchangers 17a, 17b, and 17c and each PTC heater 18 can be brought into close contact with each other to be incorporated in the lower case 11b.

Subsequently, a terminal of the power harness 27 and the terminal 14a of the electrode plate 14 are screwed and fixed through the screws 13b and 14b to the terminal blocks 13a and 13c of the control board 13 provided on the heat exchanger pressing member 16, and also wire connection of an electrical system is performed by connecting the LV harness 28 with a connector, the upper case 11a is screwed and fixed to the lower case 11b so as to cover the electrical system, and thereby the heat medium heating apparatus 10 can be assembled. The heat medium heating apparatus 10 makes the heat medium flowed into the inlet header section 21 through the heat medium inlet path 11d flow through the plurality of flat tube heat exchangers 17, makes the heat medium heated by the PTC heater 18, subsequently makes the heat medium flowed out of the outlet header section 22 through the heat medium outlet path 11e, and thereby serves to heat a heat medium circulated in the heat medium circulation circuit 10A.

In this way, according to the heat medium heating apparatus 10 and the vehicle air-conditioning apparatus 1 of the embodiment, the following operational effects are exerted.

The heat medium heating apparatus 10 is configured such that the plurality of (three) flat tube heat exchangers 17a, 17b, and 17c are laminated, and such that each of the flat tube heat exchangers 17a, 17b, and 17c and the plurality sets of PTC heaters 18 are pressed by the heat exchanger pressing member 16 to be brought into close contact with each other in a state where the PTC heaters 18 are incorporated among the flat tube sections 20, respectively. Furthermore, each of the flat tube heat exchangers 17a, 17b, and 17c is made as the tube in which the inlet header section 21 and the outlet header section 22 are located side by side at one end, the U-turn section 23 is formed at the other end, and also in which the flat tube section 20 forms the U-turn flow path 24 leading from the inlet header section 21 to the outlet header section 22 through the U-turn section 23, and in which the end on the U-turn section 23 side is unconstrained in a lamination direction.

Therefore, in the PTC heater 18 is incorporated to be laminated among the flat tube sections 20 of the plurality of flat tube heat exchangers 17a, 17b, and 17c, respectively, the PTC heater 18 is inserted from the end on the U-turn section 23 side of the unconstrained flat tube heat exchangers 17a, 17b, and 17c, and thereby the PTC heater 18 can be easily incorporated among the flat tube sections 20. Accordingly, incorporation work of the PTC heater 18 among the flat tube sections 20 can be made easier, and also the inter-tube space S in the inlet and outlet header sections 21 and 22 is set to be corresponding to the thickness size of the PTC heater 18, whereby can be relieved stress concentration on tube bases due to tube curvature when the flat tube sections 20 and the PTC heaters 18 are brought into close contact with each other.

In order to improve adhesion property of the flat tube sections 20 and the PTC heater 18, at least the flat tube sections 20 of each of the flat tube heat exchangers 17a, 17b, and 17c may just be pressed by the heat exchanger pressing member 16, the strength need not be made high so that the inlet and outlet header sections 21 and 22 are not crushed at the time of pressure. Accordingly, the structures of the inlet and outlet header sections 21 and 22 can be simplified, and also the adhesion property between each of the flat tube heat exchangers 17a, 17b, and 17c and the PTC heater 18 is enhanced, a heat transfer efficiency is improved by reducing a thermal contact resistance therebetween, and thereby higher performance of the heat medium heating apparatus 10 can be achieved.

In particular, since each of the flat tube heat exchangers 17a, 17b, and 17c is made as the tube in which the inlet header section 21 and the outlet header section 22 are located side by side at one end, and in which the U-turn flow path 24 leading from the inlet header section 21 to the outlet header section 22 through the U-turn section 23 are formed. A heat exchange characteristic between each flat tube heat exchanger 17 and the PTC heater 18, as shown in Fig. 7A, indicates the characteristic in which a temperature and an exchange heat amount of the heat medium (hot water) are changed with respect to a temperature of the PTC heater 18 as shown in Fig. 7A. Accordingly, as shown in Fig. 7B, heating capacity of the PTC heater 18 that becomes surplus on the outlet header section 22 side where load is low is moved to the inlet header section 21 side to be effectively utilized, and thus a much higher efficiency can be realized.

Furthermore, since the plurality of flat tube heat exchangers 17a, 17b, and 17c respectively have a one-end header structure in which the inlet header section 21 and the outlet header section 22 are located side by side at the one end, the size in the longitudinal direction of the tube can be more reduced compared with a flat tube heat exchanger with a both-ends header structure in which inlet and outlet header sections are located at both ends of the tube. In addition, the need for a large heat medium flow box etc. can be eliminated, so that reduction in size and weight and reduction in cost of the heat medium heating apparatus 10 can be achieved.

Since the each of the flat tube heat exchangers 17a, 17b, and 17c is made as the flat tube in which the pair of plate members 25a and 25b where the inlet header section 21 and the outlet header section 22, and the flat tube section 20 have been integrally molded is overlapped and brazed, each of the flat tube heat exchangers 17a, 17b, and 17c is made as the thin flat tube in which the pair of molded plate members 25a and 25b is laminated, the PTC heater 18 is laminatedly disposed among the thin flat tubes in the multi-layered manner, and thereby a heat exchange module having a thin structure with a small flat surface area can be configured. Accordingly, by incorporation of the heat exchange module, reduction in size and weight and reduction in cost of the heat medium heating apparatus 10 can be achieved, and also incorporation of the PTC heater 18 can be made easier.

According to the embodiment, since the heat medium supplied to the radiator 6 disposed in the air flow path 2 can be heated to be supplied by the heat medium heating apparatus 10 in which reduction in size and weight, and higher performance have been achieved as described above, improvement in air-conditioning performance, particularly heating performance in the vehicle air-conditioning apparatus 1 can be achieved, and also an installation space thereof is reduced, and thereby mounting property of the air-conditioning apparatus 1 to a vehicle can be improved.

### [Second embodiment]

Next, a second embodiment of the present invention will be described using Fig. 8.

The embodiment is different from the above-described first embodiment in a point where a heat blocking section is provided in the U-turn flow path 24 of the flat tube heat exchanger 17. Since the other points are similar to the first embodiment, description thereof will be omitted.

In the embodiment, as shown in Fig. 8, the heat medium heating apparatus 10 is configured such that a heat blocking section 26 constituted by, for example, a slit etc. is provided along a tube longitudinal direction between two flow paths forming the U-turn flow path 24 of each of the plurality of flat tube heat exchangers 17.

As described above, the heat blocking section 26 is provided between the two flow paths forming the U-turn flow path 24 of each of the plurality of flat tube heat exchangers 17, and thereby inter-heat medium heat transfer between a heat medium with a low temperature near the inlet header section 21, the heat medium flowing through the two flow paths that form the U-turn flow path 24, and a heat medium on the outlet header section 22 side whose temperature is heated to be higher by the PTC heater 18 can be blocked through the heat blocking section 26 constituted by, for example, the slit etc. Accordingly, heat loss due to inter-heat medium heat transfer can be reduced, and much higher performance of the heat medium heating apparatus 10 can be realized.

### [Third embodiment]

Next, a third embodiment of the present invention will be described using Figs. 9 to 10B.

The embodiment is different from the above-described first and second embodiments in a point where an inlet header section 31 and an outlet header section 32 are provided at both ends of the flat tube heat exchanger 17. Since the other points are similar to the first embodiment, description thereof will be omitted.

In the embodiment, each of the plurality of flat tube heat exchangers 17a, 17b, and 17c is configured such that the inlet header section 31 having a communication hole 31a is provided on a one end side, the outlet header section 32 having a communication hole 32a on the other end side, and such that a flat tube section 30 is made therebetween.

Additionally, the tube is configured such that an inter-tube space S at least on a one side (on both sides of two sides parallel to each other in the embodiment) in a tube longitudinal direction of the flat tube section 30 is gradually enlarged outwardly from a center side in an unassembled state as shown in Fig. 10B. The PTC heater 18 is inserted among the flat tube sections 30 of the three flat tube heat exchangers 17a, 17b, and 17c from one side of the inter-tube space S gradually enlarged outwardly, and thereby the PTC heater 18 can be incorporated among the flat tube sections 30 of the respective flat tube heat exchangers 17 in a state of being laminated.

The flat tube section 30 of each flat tube heat exchanger 17 and the PTC heater 18 are, similarly to the above-described first embodiment, pressed by the heat exchanger pressing member 16 of the substrate sub-assembly 15, brought into close contact with each other, and incorporated in the casing 11. It is to be noted that although in the embodiment, two sides parallel to each other in the tube longitudinal direction of the flat tube section 30 are both gradually enlarged outwardly from the center side, only the one side from which the PTC heater 18 is inserted may just be gradually enlarged outwardly.

As described above, the heat medium heating apparatus 10 is configured such that each of the flat tube heat exchangers 17a, 17b, and 17c is made as the tube in which the inlet header section 31 is provided at one end, the outlet header section 32 is provided at the other end, the flat tube section 30 is made therebetween, and also such that the inter-tube space S at least on the one side in the tube longitudinal direction of the flat tube section 30 is gradually enlarged outwardly in the unassembled state, also whereby in the PTC heater 18 being incorporated to be laminated among the flat tube sections 30 of the three flat tube heat exchangers 17, the PTC heater 18 is inserted from the one side in the tube longitudinal direction in which the inter-tube space S is gradually enlarged outwardly in the unassembled state, and thereby the PTC heater 18 can be easily incorporated among the flat tube sections 30.

Accordingly, similarly to the first embodiment, incorporation work of the PTC heater 18 among the flat tube sections 30 can be made easier, and also the inter-tube space in the inlet and outlet header sections 31 and 32 is set to be corresponding to a thickness size of the PTC heater, whereby can be relieved stress concentration on tube bases due to tube curvature when the flat tube sections 30 and the PTC heater 18 are brought into close contact with each other. In addition, in order to improve adhesion property of the flat tube sections 30 and the PTC heater 18, at least the flat tube section 30 of each flat tube heat exchanger 17 may just be pressed by the heat exchanger pressing member 16, a strength need not be made high so that the inlet and outlet header sections 31 and 32 are not crushed at the time of pressure, and thus a structure of the flat tube section 30 can be simplified.

The adhesion property between each flat tube heat exchanger 17 and the PTC heater 18 is enhanced, a heat transfer efficiency is improved by reducing a thermal contact resistance therebetween, higher performance of the heat medium heating apparatus 10 can be achieved, and also a flat surface area can be made small by laminatedly disposing the plurality of flat tube heat exchangers 17 and the PTC heaters 18 in the multi-layered manner. In addition, the need for a large heat medium flow box etc. can be eliminated, so that reduction in size and weight and reduction in cost of the heat medium heating apparatus 10 can be achieved.

### [Fourth embodiment]

Next, a fourth embodiment of the present invention will be described using Figs. 11 to 12B.

The embodiment is different from the above-described third embodiment in a point where an inlet header section 41 and an outlet header section 42 that are provided at both ends of the flat tube heat exchanger 17 are deviated to be located on a one side. Since the other points are similar to the third embodiment, description thereof will be omitted.

In the embodiment, the heat medium heating apparatus 10 is configured such that the inlet header section 41 having a communication hole 41a provided at the one end side of each of the plurality of flat tube heat exchangers 17a, 17b, and 17c, and the outlet header section 42 having a communication hole 42a provided at the other end side thereof are deviated to be located at the one side in the tube longitudinal direction, and such that a flat tube section 40 is made therebetween.

The above-described flat tube section 40 of each of the flat tube heat exchangers 17a, 17b, and 17c is configured such that the inter-tube space S is gradually enlarged from the above-described one side to the other side, the PTC heater 18 is inserted in the inter-tube space S, and thereby the PTC heater 18 can be incorporated among the flat tube sections 30 of the respective flat tube heat exchangers 17a, 17b, and 17c in a state of being laminated.

In this way, according to the embodiment, the heat medium heating apparatus 10 is configured such that the inlet header section 41 and the outlet header section 42 are deviated to be disposed on the one side in the tube longitudinal direction, and such that the inter-tube space S of the flat tube section 40 between the inlet header section 41 and the outlet header section 42 is gradually enlarged from the one side to the other side. Therefore, the inter-tube space S of the flat tube section 40 in which the PTC heater 18 is incorporated can be gradually enlarged over the whole tube width direction from the one side to the other side in the tube longitudinal direction. Accordingly, the PTC heater 18 is made easier to insert among the flat tube sections 40 of the plurality of flat tube heat exchangers 17, and incorporation work of the PTC heater 18 can be made much easier.

### [Fifth embodiment]

Next, a fifth embodiment of the present invention will be described using Figs. 13A and 13B.

The embodiment is different from the above-described first to third embodiments in an assembling structure of the plurality of flat tube heat exchangers 17a, 17b, and 17c and the PTC heaters 18. Since the other points are similar to the third embodiment, description thereof will be omitted.

In the embodiment, the heat medium heating apparatus 10 is configured such that the plurality of flat tube heat exchangers 17a, 17b, and 17c and the PTC heaters 18 are alternately laminatedly disposed on the inner bottom surface of the lower case 11b, while sandwiching the PTC heater 18 among the flat tube heat exchangers 17, the upper tier of flat tube heat exchanger 17a is laminated, subsequently the substrate sub-assembly 15 is placed on the top surface of the uppermost tier of flat tube heat exchanger 17a, the heat exchanger pressing member 16 of the substrate sub-assembly 15 is screwed and fixed on the lower case 11b side through the four fixing screws 15b, and thereby the plurality of flat tube heat exchangers 17a, 17b, and 17c and the PTC heaters 18 can be incorporated in the lower case 11b in a state where the inlet header sections 21 and the outlet header sections 22 of the three flat tube heat exchangers 17a, 17b, and 17c, and the flat tube section 20 and each PTC heater 18 are brought into close contact with each other.

That is, in the first to third embodiments, the heat medium heating apparatus 10 is configured such that the inlet header sections 21, 31, and 41 and the outlet header sections 22, 32, and 42 of the plurality of flat tube heat exchangers 17 are brought into close contact to be joined, the PTC heater 18 is inserted from the one end or the one side of the flat tube sections 20, 30, and 40, and laminatedly disposed, thereby the three flat tube heat exchangers 17 and the two sets of PTC heaters 18 are sub-assembled, and such that subsequently, the obtained sub-assembly is pressed from above by the heat exchanger pressing member 16 of the substrate sub-assembly 15, and assembled in the lower case 11b. Meanwhile, in the embodiment, as shown in Fig. 13, first, the lower tier of flat tube heat exchanger 17c is incorporated on the inner bottom surface of the lower case 11b, the PTC heater 18 is laminated on the flat tube section 20 of the lower tier of flat tube heat exchanger 17c, and also a sealing material 29, such as an O-ring and a liquid gasket, is disposed in peripheries of the communication holes 21a and 22a provided in the inlet header section 21 and the outlet header section 22 (refer to Figure 13B).

The heat medium heating apparatus 10 is configured such that the middle tier of flat tube heat exchanger 17c is laminated on top surfaces of the PTC heater 18 and the sealing material 29, the PTC heater 18 and the sealing material 29 are similarly laminated and arranged further on the middle tier of flat tube heat exchanger 17c, subsequently the upper tier of flat tube heat exchanger 17a is laminated, thereby as shown in Fig. 13A, the three flat tube heat exchangers 17a, 17b, and 17c, and the two sets of PTC heaters 18 are alternately sequentially laminated in the multi-layered manner, and such that the obtained lamination is pressed from above by the heat exchanger pressing member 16 of the substrate sub-assembly 15, and assembled in the lower case 11b.

As described above, even though the three flat tube heat exchangers 17a, 17b, and 17c, and the two sets of PTC heaters 18 are not previously sub-assembled, the flat tube heat exchangers 17a, 17b, and 17c and the PTC heaters 18 are incorporated while being alternately sequentially laminated one by one, and also thereby similarly to the first embodiment, the three flat tube heat exchangers 17 and the two sets of PTC heaters 18 can be brought into close contact with each other and then incorporated in the lower case 11b.

In this way, according to the embodiment, the flat tube heat exchangers 17a, 17b, and 17c and the PTC heaters 18 may just be alternately laminatedly incorporated in the multi-layered manner, incorporation work of the PTC heater 18 among the flat tube sections 20 can be made easier, and also the sealing material 26 is disposed in the peripheries of the communication holes 21a and 22a of the inlet header section 21 and the outlet header section 22, the sealing material 26 can be reliably made to adhere, and then the inlet header section 21 and the outlet header section 22 can be sealed, so that leakage of a heat medium can be prevented, and sealing property of the inlet header section 21 and the outlet header section 22 can be improved. In addition, in order to enhance the adhesion property of the flat tube sections 20 and the PTC heaters 18, the flat tube sections 20 of the flat tube heat exchangers 17 may just be pressed by the heat exchanger pressing member 16, the adhesion property among the flat tube heat exchangers 17 and the PTC heaters 18 is enhanced, a heat transfer efficiency is improved by reducing a thermal contact resistance thereamong, and then higher performance of the heat medium heating apparatus 10 can be achieved.

In particular, in the flat tube heat exchanger 17 in which the inlet header section 21 and the outlet header section 22 are located side by side at the one end thereof, a heating capacity of the PTC heater 18 on an outlet header section 22 side where load is low can be effectively utilized on an inlet header section 21 side, and thus a much higher efficiency can be realized. Further, since the plurality of flat tube heat exchangers 17 respectively have a one-end header structure in which the inlet header section 21 and the outlet header section 22 are located side by side at the one end, the size in the longitudinal direction of the flat tube heat exchanger 17 can be more reduced compared with the flat tube heat exchanger with the both-ends header structure. In addition, the need for a large heat medium flow box etc. can be eliminated, so that reduction in size and weight and reduction in cost of the heat medium heating apparatus 10 can be achieved.

It is to be noted that the present invention is not limited to inventions pertaining to the above-described embodiments, and modification can be made appropriately without departing from the spirit of the present invention. For example, in the above-described embodiments, the heat medium heating apparatus 10 is configured such that the flat tube heat exchanger 17 is laminated to be three layers, and the PTC heater 18 is incorporated among the respective flat tube heat exchangers 17, but the present invention is not limited to this, and it goes without saying that the number of lamination of the flat tube heat exchanger 17 and the PTC heater 18 may be increased or decreased. In addition, although an example has been described where the casing 11 is made as a resin molding, the present invention is not limited to this, and it is needless to say that the casing 11 may be made of metal, such as aluminum alloy.

### {Reference Signs List}

- 1: Vehicle air-conditioning apparatus
- 6: Radiator
- 10: Heat medium heating apparatus
- 10A: Heat medium circulation circuit
- 11: Casing
- 16: Heat exchanger pressing member
- 17, 17a, 17b, and 17c: Flat tube heat exchanger
- 18: PTC heater
- 20, 30, and 40: Flat tube section
- 21, 31, and 41: Inlet header section
- 22, 32, and 42: Outlet header section
- 23: U-turn section
- 24: U-turn flow path
- 25a and 25b: Molded plate member
- 26: Heat blocking section
- 29: Sealing material
- S: Inter-tube space

## Claims

1. A heat medium heating apparatus comprising:
a plurality of flat tube heat exchangers in each of which a heat medium flowed from an inlet header section flows through a flat tube section, and subsequently is flowed out of an outlet header section;
a PTC heater that is incorporated between the flat tube sections of the plurality of mutually laminated flat tube heat exchangers; and
a heat exchanger pressing member that presses the plurality of laminated flat tube heat exchangers and the PTC heaters from a one surface side of the flat tube heat exchangers to bring them into close contact with each other, wherein
the each flat tube heat exchanger is made as the tube in which the inlet header section and the outlet header section are located side by side at one end, a U-turn section for a heat medium flow is formed at the other end, and also in which a U-turn flow path is formed where the flat tube section leads from the inlet header section to the outlet header section through the U-turn section, and wherein
the flat tube heat exchanger and the PTC heater are alternately laminatedly disposed in a multi-layered manner.

2. The heat medium heating apparatus according to claim 1, wherein a sealing material is disposed in peripheries of communication holes provided in the inlet header section and the outlet header section of the flat tube heat exchanger.

3. A heat medium heating apparatus comprising:
a plurality of flat tube heat exchangers in each of which a heat medium flowed from an inlet header section flows through a flat tube section, and subsequently is flowed out of an outlet header section;
a PTC heater that is incorporated between the flat tube sections of the plurality of mutually laminated flat tube heat exchangers; and
a heat exchanger pressing member that presses the plurality of laminated flat tube heat exchangers and the PTC heaters from a one surface side of the flat tube heat exchangers to bring them into close contact with each other, wherein
the each flat tube heat exchanger is made as the tube in which the inlet header section and the outlet header section are located side by side at one end, a U-turn section for a heat medium flow is formed at the other end, and also in which the flat tube section forms a U-turn flow path leading from the inlet header section to the outlet header section through the U-turn section, and an end on a side of the U-turn section is unconstrained in a lamination direction.

4. The heat medium heating apparatus according to any of claims 1 to 3, wherein the each flat tube heat exchanger is made as the flat tube in which a pair of molded plate members where the inlet header section and the outlet header section and the flat tube section have been integrally molded is overlapped and brazed.

5. The heat medium heating apparatus according to any of claims 1 to 4, wherein in the each flat tube heat exchanger, a heat blocking section is provided between two flow paths that form the U-turn flow path.

6. A heat medium heating apparatus comprising:
a plurality of flat tube heat exchangers in each of which a heat medium flowed from an inlet header section flows through a flat tube section, and subsequently is flowed out of an outlet header section;
a PTC heater that is incorporated between the flat tube sections of the plurality of mutually laminated flat tube heat exchangers; and
a heat exchanger pressing member that presses the plurality of laminated flat tube heat exchangers and the PTC heaters from a one surface side of the flat tube heat exchangers to bring them into close contact with each other, wherein
the each flat tube heat exchanger is made as the tube in which the inlet header section is provided at one end, the outlet header section is provided at the other end, the flat tube section is made therebetween, and also in which an inter-tube space at least on a one side in a tube longitudinal direction of the flat tube section is gradually enlarged outwardly in an unassembled state.

7. The heat medium heating apparatus according to claim 6, wherein the inlet header section and the outlet header section are deviated to be disposed on the one side in the tube longitudinal direction, and wherein the flat tube section is configured such that the inter-tube space is gradually enlarged from the one side toward the other side.

8. A vehicle air-conditioning apparatus configured such that a heat medium heated by a heat medium heating apparatus can be circulated in a radiator disposed in an air flow path, wherein the heat medium heating apparatus is made as the heat medium heating apparatus according to any of claims 1 to 7.
